# EUROPEAN PATENT SPECIFICATION

(11) **EP 2 362 825 B1**
(45) Date of publication and mention of the grant of the patent: **22.03.2017**
(21) Application number: 09752350.0
(22) Date of filing: 11.11.2009
(51) Int. Cl.: B29C 70/38

(54) **A METHOD OF LAYING A LAYER OF FIBRE MATERIAL AND THE RELATED APPARATUS**
VERFAHREN ZUM VERLEGEN EINER FASERMATERIALLAGE UND VERWANDTE VORRICHTUNG
PROCÉDÉ DE POSE D'UNE COUCHE DE MATÉRIAU EN FIBRES ET APPAREIL À CET EFFET

(30) Priority: 12.11.2008 DK 200801563
(43) Date of publication of application: 07.09.2011
(73) Proprietor: LM WP Patent Holding A/S, 6000 Kolding (DK)
(72) Inventor: BØRSTING, Dennis André, DK-6000 Kolding (DK); ZHOU, Qinyin, DK-5792 Årslev (DK); VAN DER ZEE, Jacobus Johannes, DK-6000 Kolding (DK)
(74) Representative: Hussey, Paul Anthony
(86) International application number: PCT/EP2009/064996
(87) International publication number: WO 2010/055063

(56) References cited:
- EP-A1- 0 316 224
- EP-A1- 1 920 908
- US-A- 3 351 001
- US-A- 4 531 992
- US-A- 4 750 965
- US-A- 4 997 510
- US-A1- 2004 069 413
- US-A1- 2008 000 576

## Description

The invention relates to a method of manufacturing fibre-reinforced blades for wind power plants. The invention also relates to an apparatus for laying fibre material on a mould adapted for the manufacture of a fibre-reinforced blade for a wind power plant.

According to one aspect, the invention relates to a method of manufacturing fibre-reinforced blades for wind power plants whereby a number of layers of material comprising fibre are arranged on a curved surface of an elongated open mould, so that some of the layers of material overlap at least partially.

### Background

In the context of manufacturing fibre-reinforced parts for wind power plants such as blades, a manufacturing process is typically employed in which a part is moulded in two halves in each their open mould, wherein a coat e.g. of gelcoat is initially applied onto the interior surface of the open mould.

A number of layers of fibre material, or mats, are subsequently arranged in the mould, typically by hand, following which resin is finally applied, typically by injection into the closed mould, to attach the individual layers of fibre material to each other. The resin can be applied to the layers manually by RTM (resin transfer moulding), VARTM (vacuum assisted resin transfer moulding) or other suitable methods. Alternatively the resin can be applied to the laminate layers prior to laying the layers (Prepeg). In the context of this, gelcoat will harden and form the surface of the product.

Arranging the layers of fibre material, or mats, within the interior of a mould is today a time-consuming and labour intensive process. Depending of the size of the part to be manufactured, and thereby the size of the mould, walkways may be arranged alongside and/or above the mould such that the workers are allowed to walk along the edge or periphery of the mould and/or above the mould in order to arrange the layers of fibre material as required.

Multiple rolls of fibre material comprising different types of fibre material are arranged on the walkways, such that the workers may pick suitable rolls comprising the required materials and arrange the materials on the form.

During the layup of fibre material, combined efforts of several workers are required, as the fibre material is heavy and not easy manipulable. Some workers assist in the rollout of material, while other workers positioned along the edge of the mould make sure that the layers are laid up correctly.

In order to secure a desired strength and stability of the part to be manufactured, it is of utmost importance that the layers are arranged correctly and without dents or wrinkles and the like.

Depending on the application and structure of the part to be manufactured, multiple layers of fibre material may be arranged within the mould and the layers are typically arranged on top of each other or next to each other possibly with overlapping edges.

The parts typically consist of as many as fifty or more layers of material, i.e. mats, and the parts are typically built up from a main laminate provided in the centre of the mould.

After a layer which is provided from a roll is arranged on the mould, the material is cut from the roll. Manufacturing of parts having curvature throughout the length of the part, such as a blade for a wind power plant, may require very long cuts along the edges of the mould.
the length of the part, such as a blade for a wind power plant, may require very long cuts along the edges of the mould.

Moulds for manufacturing such parts may be very large, and the moulds are as a consequence expensive. The time required for the arrangement of material on the mould should be kept at a minimum such that the form time (the time which a part occupies the mould) required by a part to be manufactured is kept at a minimum, thus increasing the overall productivity of the mould.

US 2007107189 A (PRICHARD et al./Boeing) suggests a method of manufacturing composite aircraft wings of varying sizes and forms by means of a tool assembly comprising a tool plate encompassing a movable surface configured to support the material from which the wing will be manufactured. An automated tape-laying machine applies the material to the tool surface to form the product. The material may constitute fibre-reinforced resin materials including graphite/epoxy and/or other composite materials commonly used in the manufacture of structural components, including, for example, glass, carbon, and/or aramid fibres carried in a polymer matrix of epoxy, vinyl ester, or polyester thermosetting plastic. The tape-laying machine applies the fibre material in a predetermined number of layers, and in a predetermined pattern and orientation which corresponds to the particular type of product to be manufactured. After the various pieces of fibre material have been applied to the tool surface, the composite lay-up is evacuated and compressed under a suitable vacuum system for curing.

US 4699683 A (MCCOWIN/Boeing) teaches a fibre laminator for simultaneously laying down a strip of parallel, flat fibre rovings (a long and narrow bundle of fibre with a twist to hold the fibre together). A head for dispensing the rovings to be laid down is supported by a gantry which includes mechanisms for moving the dispensing head longitudinally along three orthogonal axes and rotationally about a vertical axis. The head for dispensing comprises a tack down roller applying pressure, via an air insulator cushion, onto the rovings towards the underlying contoured surface of the tool, such that constant pressure over slight elevation changes is maintained.

The fibre material is preferably arranged substantially even and flush, which is why any developed dents, wrinkles or curls etc. should be smoothed out. Further, as one layer is typically applied on top of a preceding layer, the lower layer incl. possible additional layers arranged below the lower layer, tend to move or slide within the mould causing the entire layup of fibre material to move away from an intended position within the mould.

It is thus an object of the invention to provide a solution to the above drawbacks.

This is accomplished by the method of manufacturing a fibre-reinforced part as per the introductory part of this specification, wherein each layer of material is positioned on the mould by means of a number of rollers provided on a cart being conveyed along the open mould, whereby at least some of the rollers are displaced mutually during the conveyance of the cart so that the rollers substantially follow a intended contour of the layer of material.

The method according to the present invention substantially reduces the required form time required by the manufacturing of a part, and further, the method is able to reduce the efforts required by workers in order to lay up the fibre material.

Finally, the method significantly increases the overall quality of the parts being manufactured as the layup of layers is greatly improved by inter alia by the rollers being displaceable towards and away from the mould such that stretch and applying angle is controllable.

According to one embodiment, the material comprising fibre is unrolled from one or more rolls comprising material while the rolls comprising material are conveyed along the mould.

According to one embodiment, the material comprising fibre is unrolled from one or more rolls comprising material by means of an unrolling arrangement drawing the material from one or more rolls.

According to one embodiment, the rolls comprising material incl. the displaceable rollers are at least partially accommodated by a dispenser provided on the cart such that the material is arranged on the mould simultaneously with the material being unrolled from one or more rolls comprising material.

According to one embodiment, the dispenser is pivoted during conveyance, such that the rolls comprising material and the rollers assume different angular orientations.

According to one embodiment, the displaceable rollers are displaced towards or away from the mould by means of actuators.

According to one embodiment, the displacement of the rollers is controlled by processing means such as a computer.

According to one embodiment, processing means controls the displacement of rollers according to a prescribed procedure.

According to one embodiment, the processing means utilizes distance or height measurements provided by one or more sensors adapted to read a height of a layer of material arranged on the mould with respect to a reference and/or a total thickness of the layers arranged on the mould.

According to one embodiment, the layers of material are cut automatically from the roll comprising material upon the layer being arranged on the mould.

According to one embodiment, the layers are provided in the form of a number of pre-cut pieces rolled onto a single or a plurality of rolls comprising material.

According to one embodiment, a plurality of rolls is arranged as a "revolver drum" comprising a number of rolls comprising material with different properties.

In an embodiment, a mutual angle formed between axes of rotation of neighbouring rollers is changed during the conveyance of the cart along the open mould. Thereby, it may be possible to continuously adapt the orientation of the rollers to the actual configuration of the mould. Furthermore, it may be possible, during the conveyance of the cart along the open mould, to spread the layer of material outward from a central area in order to avoid wrinkles or the like.

In an embodiment, the layers of material, during the conveyance of the cart along the open mould, by means of varying orientation of roller axes of different rollers in a row formed by the rollers, are spread outward from a central area of said row formed by the rollers in the direction of end areas of said row formed by the rollers. Thereby, wrinkles or the like of the layer of material laid out may be avoided.

In an embodiment, the layers of material, during the conveyance of the cart along the open mould, by means of rollers having varying diameter along their roller axes, are spread outward from a central area of a row formed by the rollers in the direction of end areas of said row formed by the rollers. Thereby, wrinkles or the like of the layer of material laid out may be avoided.

In an embodiment, during the conveyance of the cart along the open mould, rollers in a central area of a row formed by the rollers are being advanced in front of rollers in end areas of said row formed by the rollers. Thereby, it may be possible, during the conveyance of the cart along the open mould, to spread the layer of material outward from a central area in order to avoid wrinkles or the like.

The invention further relates to an apparatus for manufacturing fibre-reinforced parts such as blades for wind power plants, the apparatus being adapted to arrange a number of layers of material comprising fibre on a curved surface of an elongated open mould, so that some of the layers of material overlap at least partially, said apparatus comprising a cart adapted to be conveyed along the open mould.

The apparatus is characterized in that a number of rollers are provided on the cart and are adapted to position each layer of material on the mould, and in that at least some of the rollers are mutually displaceable during the conveyance of the cart so that the rollers substantially may follow an intended contour of the layer of material.

According to one embodiment, the apparatus comprises an applicator, pivotally connected to the cart, and accommodating rollers being displaceable towards and away from the mould.

According to one embodiment, the rollers are displaceable by means of actuators.

According to one embodiment, the actuators are controlled by processing means such as a computer or equivalent.

According to one embodiment, the processing means comprises software allowing the processor to control the displacement of the rollers according to a prescribed procedure.

According to one embodiment, the apparatus further comprises one or more sensors adapted to read a height of a layer of material arranged on the mould with respect to a reference and/or a total thickness of the layers arranged on the mould.

According to one embodiment, applicator accommodates a roll comprising material to be arranged on said mould.

According to one embodiment, the applicator accommodates an unrolling arrangement adapted to facilitate unrolling of material to be arranged on the mould.

According to one embodiment, the applicator accommodates a roll comprising material in the form of a "revolver drum" comprising a number of rolls each comprising material with different properties.

According to one embodiment, the actuators constitute pneumatic actuators.

In an embodiment, at least some of the rollers are arranged so that the orientations of their axes of rotation are individually adjustable. Thereby, it may be possible to continuously adapt the orientation of the rollers to the actual configuration of the mould. Furthermore, it may be possible, during the conveyance of the cart along the open mould, to spread the layer of material outward from a central area in order to avoid wrinkles or the like.

In an embodiment, at least some of the rollers are arranged so that the orientations of their axes of rotation are individually adjustable seen from above the apparatus. Thereby, it may be possible, during the conveyance of the cart along the open mould, to spread the layer of material outward from a central area in order to avoid wrinkles or the like.

In an embodiment, seen from above the apparatus, the rollers are arranged on the cart so that rollers in a central area of a row formed by the rollers are positioned at an advanced position, seen in the direction of conveyance of the cart, relative to rollers in end areas of said row formed by the rollers. Thereby, it may be possible, during the conveyance of the cart along the open mould, to spread the layer of material outward from a central area in order to avoid wrinkles or the like.

In an embodiment, seen from above the apparatus, the rollers are arranged on the cart in a row substantially having the form of a V.

In an embodiment, seen from above the apparatus, the rollers are arranged on the cart in a row substantially having the form of a semi-circle.

In an embodiment, seen from above the apparatus, the rollers are arranged on the cart in a row so that an angle between a transverse direction to the direction of conveyance of the cart and the direction of the axis of rotation of the individual rollers is increasing from a central area of the row of rollers towards end areas of the row of rollers. Thereby, it may be possible, during the conveyance of the cart along the open mould, to spread the layer of material outward from a central area in order to avoid wrinkles or the like.

In an embodiment, the rollers are arranged on the cart in a row, and in that at least some of the rollers are substantially conical with a cone angle of the individual rollers that is increasing from a central area of the row of rollers towards end areas of the row of rollers. Thereby, it may be possible, during the conveyance of the cart along the open mould, to spread the layer of material outward from a central area in order to avoid wrinkles or the like.

### Brief description of the figure

The invention will now be explained in more detail below by means of examples of embodiments with reference to the very schematic drawing, in which
Figure 1 shows a cross-section through a part, such as a root part, of an open mould and an apparatus incl. an applicator in one position.
Figure 2 shows a cross-section through a part of an open mould and an apparatus incl. an applicator in a position being different from the position as illustrated in figure 1.
Figure 3 shows a cross-section through a part, such as an airfoil part, of an open mould and the applicator of the apparatus shown in Figs 1 and 2.
Figure 4 to 6 show different embodiments of a row of rollers of the apparatus of Fig. 1.

### Detailed description with reference to the figures

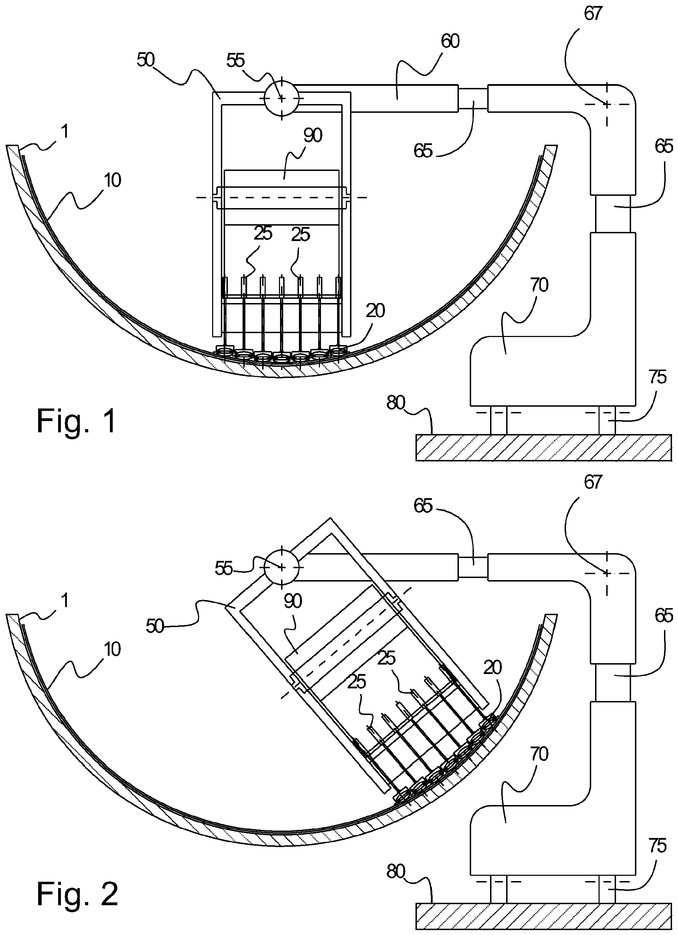

Figure 1 shows a sectional view of an open mould 1, which in the illustrated scenario accommodates a plurality of layers, or mats, 10 of fibre material.

The layers 10 are illustrated as having a width or breadth corresponding substantially to the breadth of interior surface of the mould 1. The layers 10 could however equally have been illustrated as juxtaposed or overlapping layers. The mould 1 may typically constitute an elongated mould having a length corresponding substantially to the length of the part or sub-part to be manufactured inter alia from the layers 10.

The layers 10 may constitute pre-cut pieces intended for a particular site of application within the mould 10 and the pre-cut pieces may, prior to being arranged on the mould 1, be rolled onto a roll 90. As an equal alternative, the fibre material applied to the mould 1 may simply constitute an "endless" length of material being rolled onto a roll 90 which upon the material being arranged within or on the mould 1, is cut from the roll 90.

The roll 90 may constitute a "revolver drum" (not shown) configured for accommodating two or more rolls, such that fibre material with different properties, such as dimensions and the like, may be arranged onto the mould 1 without disturbing the process of laying up one or more layers of fibre material.

Within the mould 1, an applicator 50 is suspended from an arm 60 of a cart 70. The cart 70 may comprise wheels 75 allowing the cart 70 to move along the sides of the mould 1. Alternatively, other means for conveying the cart 70 along the mould may be applied. According to one not illustrated embodiment, the cart 70 is conveyed along the mould by means of a dedicated track-system arranged directly or indirectly on the mould 1.

The applicator 50 may be rotationally connected to the arm 60 via pivot 55, such that the applicator 50 may, freely or not, assume various angular positions. The axis of the pivot 55 may be oriented substantially in a longitudinal axis of the mould and/or substantially parallel to the direction of conveyance of the cart 70.

The applicator 50 and/or the cart 60 may be provided with means (not shown) for rotating the applicator 50 about the pivot 55.

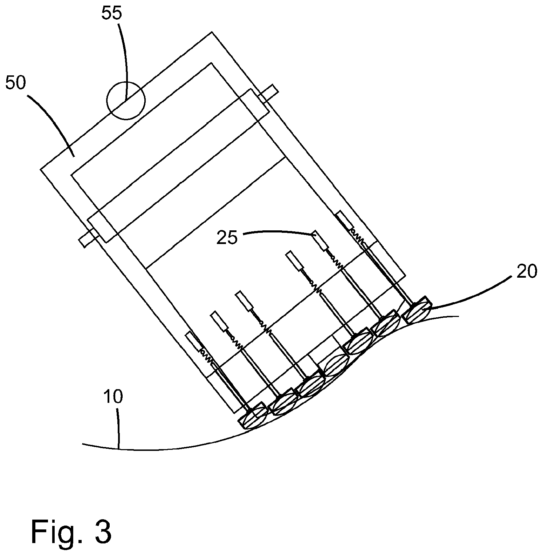

The cart 70 and/or the arm 60 may be provided with means allowing the pivot 55 to move or shift between any position above the mould 1 such that the applicator 50 is allowed to facilitate arrangement of fibre material, or mats, on a mould, or a part of a mould which is not substantially circular as shown in figure 1 & 2. Typically a mould for manufacturing blades for wind power plants is in one end substantially circular, such as shown in figure 1 & 2 which illustrates a section of a mould for manufacturing the end of the blade, the root section, facing the hub. The blade, and thereby the mould continuously changes form along a longitudinal axis of the mould. Fig. 3 shows a cross-section through a part of the mould for a compound curved blade profile for the airfoil section of the blade.

The means allowing the pivot 55 to move or shift between positions may constitute further pivots 67 and/or telescopic portions 65 or equivalent provided in the arm 60 and/or a portion of the cart 70, such that the pivot 55 is allowed to assume any position above the mould.

As can be seen in figure 1, the applicator 50 is provided with rollers 20 which at least some of which are displaceable towards and away from the inner surface of the mould 1.

The directions of displacement of the rollers 20 are such that the rollers 20 displaces at least substantially perpendicular to the surface of the mould 1.

Numeral 25 refers to actuators adapted to provide displacement of the rollers 20. The actuators may comprise different means, such as springs, pressurized mediums, magnets and the like in order to cause the abovementioned displacement. Further, the actuators, or a system connected to the actuators, may be able to control the pressure applied to the material which is in contact with the rollers 20.

As indicated in Figs. 1 to 3, by means of the actuators 25, the position of the individual rollers 20 may be adapted to the actual form of the mould at the cross-section of the mould where the applicator 50 is situated at the moment. Thereby, in Fig. 1 and 2, whereby the applicator 50 is situated at the root section of the mould, the rollers 20 are positioned substantially along a section of a circle. However, in Fig. 3, whereby the applicator 50 is situated at the airfoil section of the mould, the rollers 20 are positioned along a path curving up and down.

The axis of the displacement of the actuators 25 may be substantially perpendicular to the axis of pivot 55, however according to some embodiments, the axis of displacement of the actuators 25 and/or rollers 20 may be displaceable, e.g. in order to obtain predetermined and dynamic angles between the axis of displacement of the rollers 20 and the material being arranged on the mould 1.

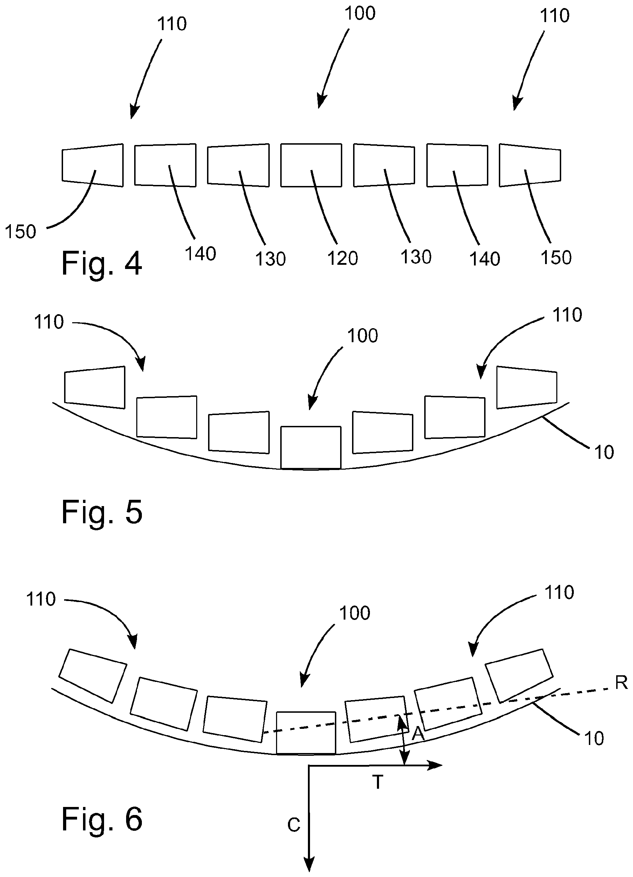

As indicated in Figs. 5 and 6, the axis of displacement of the rollers 20 and/or the actuators 25 may be mutually displaceable, whereby the material to be applied to the mould may be smoothened.

Further, the rollers 20 may be displaced in any direction and independently from each other.

Although not shown, one or more of the rollers 20 may be able to swivel or pivot about an axis being substantially parallel with the direction or axis of conveyance.

According to one not shown embodiment, only a part of the rollers 20 may be used under the process of arranging the material on the mould. Any not used rollers 20 may be totally or partially retracted during the process of laying the material.

The illustrated applicator is provided with a total of seven rolls 25, each provided with an actuator 25 which may be able to apply different displacements of and/or pressures onto the material and with respect to each other. Although not illustrated, it may be preferred to provide the applicator 50 with another number of rolls 20 and/or actuators 25, and the number of actuators 25 may not necessarily correspond to the number of rolls 20. Depending on the actual configuration, it may be sufficient to provide the applicator 50 with only one actuator 25 applying pressure to a plurality of rolls 20.

The illustrated rolls 20 are partially rounded or spherical, however, the applicator may be provided with one or more elongated rollers of substantially barrel shape or cylindrical form, as indicated in the embodiments shown in Figs. 4 to 6. Further, the rollers 20 may or may not be made from a material being somewhat flexible, such that the rollers' 20 contact with the material does not inflict damage to the material.

Fig. 4 shows an embodiment wherein the rollers 20 are arranged in a row, so that at least some of the rollers 20 are substantially conical with a cone angle of the individual rollers 20 that is varying from a central area 100 of the row of rollers 20 towards end areas 110 of the row of rollers 20. In fact, in the embodiment shown, a first, central roller 120 is cylindrical, second rollers 130 neighbouring the first roller 120 are conical so that they taper in the direction of the end areas 110, third rollers 140 neighbouring the second rollers 130 are conical and tapering in the direction of the end areas 110, but with a cone angle that is smaller than that of the second rollers 130, and fourth rollers 150 neighbouring the third rollers 140 are conical and tapering in the direction of the end areas 110, but with a cone angle that is larger that of the second rollers. However, in another, not shown embodiment, the cone angle of the third rollers 140 is larger than that of the second rollers 130 and smaller than that of the fourth rollers 150. In that case, the cone angle of the individual rollers 20 is increasing from a central area 100 of the row of rollers 20 towards end areas 110 of the row of rollers 20. Many combinations of rollers with different cone angles are possible. Although the rollers are shown as substantially conical, other configurations of rollers having an increasing diameter along their axis are possible, such as for instance a kind of deformed or asymmetrical barrel shape. More than just the first, central roller may by cylindrical. As a consequence of the varying cone angle or diameter increase of the rollers, during the conveyance of the cart 70 along the open mould 1, the layers 10 of material are by means of the rollers 20 spread outward from the central area 100 in the direction of the end areas 110. Thereby, wrinkles or the like of the layer of material laid out may be avoided.

Fig. 5 shows a top view of another embodiment of the arrangement of the rollers 20 in a row. In the embodiment shown, the individual rollers are identical with those in the above described embodiment shown in Fig. 4; however, the rollers 20 may just as well have different configurations such as cylindrical or for instance barrel shaped. In the embodiment of Fig. 5, the rollers are arranged so that, during the conveyance of the cart 70 along the open mould 1, rollers 120, 130 in the central area 100 are being advanced in front of rollers 140, 150 in the end areas 110. In the specific configuration shown in the figure, the rollers 20 are arranged on the cart 70 in a row substantially having the form of a V. The top angle of the V could be different. As a consequence of this arrangement of the rollers, during the conveyance of the cart 70 along the open mould 1, the layers 10 of material are by means of the rollers 20 spread outward from the central area 100 in the direction of the end areas 110. Thereby, wrinkles or the like of the layer of material laid out may be avoided.

Fig. 6 shows a top view of another embodiment of the arrangement of the rollers 20 in a row. In the embodiment shown, the individual rollers are identical with those in the above described embodiments shown in Figs. 4 and 5; however, the rollers 20 may just as well have different configurations. In the embodiment of Fig. 6, seen from above the apparatus, the rollers 20 are arranged on the cart 70 in a row so that an angle A between a transverse direction T to the direction C of conveyance of the cart 70 and the direction of the axis of rotation of the individual rollers is increasing from a central area of the row of rollers 20 towards end areas of the row of rollers 20. In the figure, the axis R of rotation of the second roller 130 is indicated. As a consequence of this arrangement, the rollers are arranged on the cart in a row substantially having the form of a semi-circle. As a consequence of this arrangement of the rollers, during the conveyance of the cart 70 along the open mould 1, the layers 10 of material are by means of the rollers 20 spread outward from the central area 100 in the direction of the end areas 110. Thereby, wrinkles or the like of the layer of material laid out may be avoided.

At least some of the rollers 20, 120, 130, 140, 150 may be arranged so that the orientations of their axes of rotation are individually adjustable, that is their axes of rotation may be displaced or rotated in any suitable way. The adjustment may be adapted to be performed during or before advancement of the cart 70. In this way, the apparatus according to the invention may, for instance, be adapted to be able to shift the configuration of rollers between the configurations shown in Figs. 4 to 6. Further, each roller 20, 120, 130, 140, 150 may be arranged somewhat flexible on an axle of rotation on which the roller is carried, so that the direction of its actual axis of rotation may vary slightly in relation to the direction of its axle of rotation.

Although not shown in the figures, the rollers 20 and/or the actuators 25 may be resiliently arranged onto or within the dispenser 50, and the axis of displacement of the rollers 20 may be offset or angled from the axis of the actuators 25.

The actuators employed throughout the apparatus according to the present invention may be controlled by not shown processing means such as a computer or equivalent.

Although not shown in the figures, a main laminate having a relatively great thickness, possibly as much as 100 mm or more and a width of about 800 mm may be arranged in the mould 1, possibly as a first layer.

Further, and not shown in the figures, between the layers of material, balsa wood may be interposed in order to obtain a desired distance between the layers of fibre material. The balsa wood may also be subjects to the method of manufacture according to this specification.

The apparatus incl. the applicator 70 or the arm 60 etc. may be provided with means for recording pictures such that the layup of material may be documented and stored.

The processing means may be configured to control the apparatus according to predetermined settings such that the layers may be laid according to an automated process.

Further, and not shown in the figures, the method and apparatus according to the present invention may comprise steps or means which process, by means of cutting, one or more layers of material.

The fibre material may be cut into mats of predetermined size and shape such that the mats or material may be arranged on the mould without requiring further modification. As an equal alternative, the method and apparatus according to the present invention may be able to cut the fibre material or mats upon the material being arranged on the mould.

It will be understood that the invention as disclosed in the present description and figures can be modified or amended while continuing to be comprised by the protective scope conferred by the following claims.

## Claims

1. A method of manufacturing fibre-reinforced blades for wind power plants whereby a number of mats (10) of material comprising fibre are arranged on a curved surface of an elongated open mould (1), so that some of the mats (10) of material overlap at least partially, wherein each mat (10) of material is positioned on the mould (1) by means of a number of rollers (20) provided on a cart (70) being conveyed along the open mould (1), whereby at least some of the rollers (20) are displaced mutually during the conveyance of the cart (70) so that the rollers (20) substantially follow an intended contour of the mat (10) of material, wherein said material comprising fibre is unrolled from one or more rolls comprising material (90), and wherein said rolls comprising material (90) are conveyed along said mould (1), alternatively said material comprising fibre is unrolled from one or more rolls comprising material (90) by means of an unrolling arrangement drawing said material from said one or more rolls comprising material (90), and wherein one or more rolls comprising material (90) and said rollers (20) are at least partially accommodated by a dispenser (50) suspended from an arm (60) of said cart (70), wherein the dispenser (50) is rotationally connected to the arm (60) via pivot (55), such that said material is arranged on said mould (1) simultaneously with said material being unrolled from said one or more rolls comprising material (90), and wherein said dispenser (50) is pivoted about the pivot (55) during conveyance, such that said rolls comprising material (90), and said rollers (20) assumes different angular orientations, wherein an axis of the pivot (55) is oriented substantially in a longitudinal axis of the mould (1) and/or substantially parallel to a direction of conveyance of the cart (70).

2. A method according to any of the preceding claims wherein said rollers (20) are displaced towards or away from said mould (1) by means of actuators (25).

3. A method according to any of the preceding claims wherein said displacement of said rollers (20) is controlled by processing means such as a computer and according to a prescribed procedure.

4. A method according to claim 3 wherein said processing means utilizes distance or height measurements provided by one or more sensors adapted to read a height of a layer (10) with respect to a reference and/or a total thickness of layers (10) arranged on said mould (1).

5. A method according to any of the preceding claims wherein said layers (10) are provided in the form of a number of pre-cut pieces rolled onto a single or a plurality of rolls comprising material.

6. A method according to any of the preceding claims, wherein a plurality of rolls is arranged as a "revolver drum" comprising a number of rolls comprising material with varying properties.

7. A method according to any of the preceding claims, wherein a mutual angle formed between axes of rotation of neighbouring rollers (20) is changed during the conveyance of the cart (70) along the open mould (1).

8. A method according to any of the preceding claims, wherein the layers (10) of material, during the conveyance of the cart (70) along the open mould (1), by means of varying orientation of roller axes of different rollers (20) in a row formed by the rollers (20), are spread outward from a central area of said row formed by the rollers (20) in the direction of end areas of said row formed by the rollers (20).

9. A method according to any of the preceding claims, wherein the layers (10) of material, during the conveyance of the cart (70) along the open mould (1), by means of rollers (20) having varying diameter along their roller axes, are spread outward from a central area of a row formed by the rollers (20) in the direction of end areas of said row formed by the rollers (20).

10. A method according to any of the preceding claims, wherein, during the conveyance of the cart (70) along the open mould (1), rollers (20) in a central area of a row formed by the rollers (20) are being advanced in front of rollers (20) in end areas of said row formed by the rollers (20).

11. An apparatus for manufacturing fibre-reinforced blades for wind power plants, the apparatus being adapted to arrange a number of mats (10) of material comprising fibre on a curved surface of an elongated open mould (1), so that some of the mats (10) of material overlap at least partially, said apparatus comprising a cart (70) adapted to be conveyed along the open mould (1), **characterized in that** a number of rollers (20) are provided on the cart (70) and are adapted to position each mat (10) of material on the mould (1), and **in that** at least some of the rollers (20) are mutually displaceable during the conveyance of the cart (70) so that the rollers (20) substantially may follow an intended contour of the mat (10) of material, wherein said apparatus comprises an applicator (50) suspended from an arm (60) of said cart (70), wherein the dispenser (50) is rotationally connected to the arm (60) via pivot (55), and accommodates said rollers (20), said rollers (20) being displaceable towards and away from said mould (1), wherein an axis of the pivot (55) is oriented substantially in a longitudinal axis of the mould (1) and/or substantially parallel to a direction of conveyance of the cart (70).

12. An apparatus for laying a fibre material on a mould according to claim 11, wherein said applicator (50) accommodates a roll comprising material (90) to be arranged on said mould (1).

13. An apparatus for laying a fibre material on a mould according to any of the claims 11 - 12, wherein said applicator (50) accommodate a roll comprising material in the form of a "revolver drum" comprising a number of rolls each comprising material with varying properties.

14. An apparatus for laying a fibre material on a mould according to any of the claims 11 - 13, wherein, seen from above the apparatus, the rollers (20) are arranged on the cart (70) so that rollers (20) in a central area of a row formed by the rollers (20) are positioned at an advanced position, seen in the direction of conveyance of the cart (70), relative to rollers (20) in end areas of said row formed by the rollers (20), and wherein, seen from above the apparatus, the rollers (20) are arranged on the cart (70) in a row substantially having the form of a V or a semi-circle.

15. An apparatus for laying a fibre material on a mould according to any of the claims 11 - 14, wherein the rollers (20) are arranged on the cart (70) in a row, and in that at least some of the rollers (20) are substantially conical with a cone angle of the individual rollers (20) that is varying, and preferably increasing, from a central area of the row of rollers (20) towards end areas of the row of rollers (20).

## Patentansprüche

1. Verfahren zum Herstellen von faserverstärkten Flügeln für Windkraftanlagen, wobei eine Anzahl von Matten (10) aus Fasern umfassendem Material auf einer gekrümmten Oberfläche eines langgestreckten offenen Formwerkzeugs (1) angeordnet werden, sodass einige der Matten (10) aus Material einander mindestens teilweise überlappen, wobei jede Matte (10) aus Material mittels einer Anzahl von auf einem entlang dem offenen Formwerkzeug (1) transportierten Wagen (70) bereitgestellten Walzen (20) auf dem Formwerkzeug (1) positioniert wird, wobei mindestens einige der Walzen (20) während des Transports des Wagens (70) gegeneinander verschoben werden, sodass die Walzen (20) im Wesentlichen einer vorgesehenen Kontur der Matte (10) aus Material folgen, wobei das Fasern umfassende Material von einer oder mehreren Material (90) umfassenden Rollen abgewickelt wird, und wobei die Material (90) umfassenden Rollen entlang dem Formwerkzeug (1) transportiert werden, alternativ das Fasern umfassende Material mittels einer Abwickelanordnung, die das Material von der einen oder den mehreren Material (90) umfassenden Rollen zieht, von einer oder mehreren Material (90) umfassenden Rollen abgewickelt wird, und wobei eine oder mehrere Material (90) umfassende Rollen (90) und die Walzen (20) mindestens teilweise von einer von einem Arm (60) des Wagens (70) herunterhängenden Ausgabevorrichtung (50) untergebracht werden, wobei die Ausgabevorrichtung (50) über ein Drehgelenk (55) drehend mit dem Arm (60) verbunden ist, sodass das Material gleichzeitig mit dem Abwickeln des Materials von der einen oder den mehreren Material (90) umfassenden Rollen auf dem Formwerkzeug (1) angeordnet wird, und wobei die Ausgabevorrichtung (50) während des Transports um das Drehgelenk (55) geschwenkt wird, sodass die Material (90) umfassenden Rollen und die Walzen (20) unterschiedliche Winkelorientierungen einnehmen, wobei eine Achse des Drehgelenks (55) im Wesentlichen in einer Längsachse des Formwerkzeugs (1) und/oder im Wesentlichen parallel zu einer Transportrichtung des Wagens (70) orientiert ist.

2. Verfahren nach einem der vorangehenden Ansprüche [*sic*], wobei die Walzen (20) mittels Stellgliedern (25) auf das Formwerkzeug (1) zu oder davon weg verschoben werden.

3. Verfahren nach einem der vorangehenden Ansprüche, wobei die Verschiebung der Walzen (20) von einem Verarbeitungsmittel, wie etwa einem Computer, und gemäß einem vorgeschriebenen Ablauf gesteuert wird.

4. Verfahren nach Anspruch 3, wobei das Verarbeitungsmittel Entfernungs- oder Höhenmessungen nutzt, die von einem oder mehreren Sensoren bereitgestellt werden, die dazu angepasst sind, eine Höhe einer Schicht (10) in Bezug auf einen Bezugspunkt und/oder eine Gesamtdicke von auf dem Formwerkzeug (1) angeordneten Schichten (10) zu lesen.

5. Verfahren nach einem der vorangehenden Ansprüche, wobei die Schichten (10) in Form einer Anzahl im Voraus zugeschnittener Stücke bereitstellt werden, die auf eine einzige oder eine Vielzahl von Material umfassenden Rollen aufgewickelt sind.

6. Verfahren nach einem der vorangehenden Ansprüche, wobei eine Vielzahl von Rollen als "Revolverzylinder" angeordnet ist, der eine Anzahl von Material mit verschiedenen Eigenschaften umfassende Rollen umfasst.

7. Verfahren nach einem der vorangehenden Ansprüche, wobei ein zwischen den Drehachsen benachbarter Walzen (20) gebildeter gegenseitiger Winkel während des Transports des Wagens (70) entlang dem offenen Formwerkzeug (1) geändert wird.

8. Verfahren nach einem der vorangehenden Ansprüche, wobei die Schichten (10) aus Material während des Transports des Wagens (70) entlang dem offenen Formwerkzeug (1) mittels veränderlicher Orientierung von Walzenachsen unterschiedlicher Walzen (20) in einer von den Walzen (20) gebildeten Reihe von einem mittleren Bereich der von den Walzen (20) gebildeten Reihe in der Richtung von Endbereichen der von den Walzen (20) gebildeten Reihe nach außen ausgebreitet werden.

9. Verfahren nach einem der vorangehenden Ansprüche, wobei die Schichten (10) aus Material während des Transports des Wagens (70) entlang dem offenen Formwerkzeug (1) mittels Walzen (20) mit veränderlichem Durchmesser entlang ihrer Walzenachsen von einem mittleren Bereich einer von den Walzen (20) gebildeten Reihe in der Richtung von Endbereichen der von den Walzen (20) gebildeten Reihe nach außen ausgebreitet werden.

10. Verfahren nach einem der vorangehenden Ansprüche, wobei während des Transports des Wagens (70) entlang dem offenen Formwerkzeug (1) Walzen (20) in einem mittleren Bereich einer von den Walzen (20) gebildeten Reihe vor Walzen (20) in Endbereichen der von den Walzen (20) gebildeten Reihe voranbewegt werden.

11. Vorrichtung zum Herstellen von faserverstärkten Flügeln für Windkraftanlagen, wobei die Vorrichtung dazu angepasst ist, eine Anzahl von Matten (10) aus Fasern umfassendem Material auf einer gekrümmten Oberfläche eines langgestreckten offenen Formwerkzeugs (1) anzuordnen, sodass einige der Matten (10) aus Material einander mindestens teilweise überlappen, wobei die Vorrichtung einen Wagen (70) umfasst, der dazu angepasst ist, entlang dem offenen Formwerkzeug (1) transportiert zu werden, **dadurch gekennzeichnet, dass** eine Anzahl von Walzen (20) an dem Wagen (70) bereitgestellt sind und dazu angepasst sind, jede Matte (10) aus Material auf dem Formwerkzeug (1) zu positionieren, und dass mindestens einige der Walzen (20) während des Transports des Wagens (70) gegeneinander verschiebbar sind, sodass die Walzen (20) im Wesentlichen einer vorgesehenen Kontur der Matte (10) aus Material folgen können, wobei die Vorrichtung einen von einem Arm (60) des Wagens (70) herunterhängenden Applikator (50) umfasst, wobei die Ausgabevorrichtung (50) über ein Drehgelenk (55) drehend mit dem Arm (60) verbunden ist und die Walzen (20) unterbringt, wobei die Walzen (20) auf das Formwerkzeug (1) zu und davon weg verschiebbar sind, wobei eine Achse des Drehgelenks (55) im Wesentlichen in einer Längsachse des Formwerkzeugs (1) und/oder im Wesentlichen parallel zu einer Transportrichtung des Wagens (70) orientiert ist.

12. Vorrichtung zum Verlegen eines Fasermaterials auf einem Formwerkzeug nach Anspruch 11, wobei der Applikator (50) eine auf dem Formwerkzeug (1) anzuordnendes Material (90) umfassende Rolle unterbringt.

13. Vorrichtung zum Verlegen eines Fasermaterials auf einem Formwerkzeug nach einem der Ansprüche 11-12, wobei der Applikator (50) eine Material umfassende Rolle in Form eines "Revolverzylinders" unterbringt, der eine Anzahl von Rollen umfasst, die jeweils Material mit verschiedenen Eigenschaften umfassen.

14. Vorrichtung zum Verlegen eines Fasermaterials auf einem Formwerkzeug nach einem der Ansprüche 11-13, wobei, bei Betrachtung von oberhalb der Vorrichtung, die Walzen (20) derart an dem Wagen (70) angeordnet sind, dass Walzen (20) in einem mittleren Bereich einer von dem Walzen (20) gebildeten Reihe in einer bei Betrachtung in der Transportrichtung des Wagens (70) voranbewegten Lage relativ zu Walzen (20) in Endbereichen der von den Walzen (20) gebildeten Reihe positioniert sind, und wobei, bei Betrachtung von oberhalb der Vorrichtung, die Walzen (20) in einer im Wesentlichen die Form eines V oder eines Halbkreises aufweisenden Reihe an dem Wagen (70) angeordnet sind.

15. Vorrichtung zum Verlegen eines Fasermaterials auf einem Formwerkzeug nach einem der Ansprüche 11-14, wobei die Walzen (20) in einer Reihe an dem Wagen (70) angeordnet sind, und mindestens einige der Walzen (20) im Wesentlichen kegelförmig sind, mit einem Kegelwinkel der einzelnen Walzen (20), der von einem mittleren Bereich der Reihe von Walzen (20) zu Endbereichen der Reihe von Walzen (20) hin veränderlich und vorzugsweise zunehmend ist.

## Revendications

1. Procédé de fabrication de pales renforcées de fibres pour centrales éoliennes, ce par quoi un certain nombre de mats (10) de matériau comportant des fibres sont agencés sur une surface courbe d'un moule ouvert allongé (1), de telle sorte que certains des mats (10) de matériau se chevauchent au moins partiellement, dans lequel chaque mat (10) de matériau est positionné sur le moule (1) au moyen d'un certain nombre de cylindres (20) mis en oeuvre sur un chariot (70) qui est transporté le long du moule ouvert (1), ce par quoi au moins certains des cylindres (20) sont déplacés mutuellement lors du transport du chariot (70) de telle sorte que les cylindres (20) suivent sensiblement un contour prévu du mat (10) de matériau, dans lequel ledit matériau comportant des fibres est déroulé en provenance d'un ou de plusieurs rouleaux comportant du matériau (90), et dans lequel lesdits rouleaux comportant du matériau (90) sont transportés le long dudit moule (1), selon une autre variante ledit matériau comportant des fibres est déroulé en provenance d'un ou de plusieurs rouleaux comportant du matériaux (90) au moyen d'un agencement déroulant qui tire ledit matériau en provenance desdits un ou plusieurs rouleaux comportant du matériau (90), et dans lequel un ou plusieurs rouleaux comportant du matériau (90) et lesdits cylindres (20) sont logés au moins partiellement par un distributeur (50) suspendu en provenance d'un bras (60) dudit chariot (70), dans lequel le distributeur (50) est raccordé par rotation au bras (60) par le biais d'un pivot (55), de telle sorte que ledit matériau est agencé sur ledit moule (1) simultanément avec le déroulement dudit matériau en provenance desdits un ou plusieurs rouleaux comportant du matériau (90), et dans lequel ledit distributeur (50) est pivoté autour du pivot (55) lors du transport, de telle sorte que lesdits rouleaux comportant du matériau (90), et lesdits cylindres (20) adoptent différentes orientations angulaires, dans lequel un axe du pivot (55) est orienté sensiblement dans un axe longitudinal du moule (1) et/ou de manière sensiblement parallèle par rapport à une direction de transport du chariot (70).

2. Procédé selon l'une quelconque des revendications précédentes *[sitc]*, dans lequel lesdits cylindres (20) sont déplacés vers ledit moule (1) ou à l'opposé de celui-ci au moyen d'actionneurs (25).

3. Procédé selon l'une quelconque des revendications précédentes, dans lequel ledit déplacement desdits cylindres (20) est commandé par un moyen de traitement tel un ordinateur et en fonction d'une procédure prescrite.

4. Procédé selon la revendication 3, dans lequel ledit moyen de traitement utilise des mesures de distance ou de hauteur fournies par un ou plusieurs capteurs adaptés pour lire une hauteur d'une couche (10) par rapport à une référence et/ou une épaisseur totale des couches (10) agencées sur ledit moule (1).

5. Procédé selon l'une quelconque des revendications précédentes, dans lequel lesdites couches (10) sont mises en oeuvre sous la forme d'un certain nombre de pièces prédécoupées roulées sur un seul rouleau ou une pluralité de rouleaux comportant du matériau.

6. Procédé selon l'une quelconque des revendications précédentes, dans lequel une pluralité de rouleaux sont agencés sous la forme d'un « tambour de type revolver » comportant un certain nombre de rouleaux comportant du matériau ayant diverses propriétés.

7. Procédé selon l'une quelconque des revendications précédentes, dans lequel un angle mutuel formé entre des axes de rotation de cylindres voisins (20) est changé lors du transport du chariot (70) le long du moule ouvert (1).

8. Procédé selon l'une quelconque des revendications précédentes, dans lequel les couches (10) de matériau, lors du transport du chariot (70) le long du moule ouvert (1), au moyen d'une orientation qui varie des axes de cylindre de différents cylindres (20) dans une rangée formée par les cylindres (20), sont étalées vers l'extérieur depuis une zone centrale de ladite rangée formée par les cylindres (20) dans la direction de zones d'extrémité de ladite rangée formée par les cylindres (20).

9. Procédé selon l'une quelconque des revendications précédentes, dans lequel les couches (10) de matériau, lors du transport du chariot (70) le long du moule ouvert (1), au moyen de cylindres (20) ayant un diamètre qui varie le long des axes des cylindres, sont étalées vers l'extérieur depuis une zone centrale d'une rangée formée par les cylindres (20) dans la direction de zones d'extrémité de ladite rangée formée par les cylindres (20).

10. Procédé selon l'une quelconque des revendications précédentes, dans lequel, lors du transport du chariot (70) le long du moule ouvert (1), des cylindres (20) dans une zone centrale d'une rangée formée par les cylindres (20) sont avancés devant des cylindres (20) dans des zones d'extrémité de ladite rangée formée par les cylindres (20).

11. Appareil de fabrication de pales renforcées de fibres pour centrales éoliennes, l'appareil étant adapté pour agencer un certain nombre de mats (10) de matériau comportant des fibres sur une surface courbe d'un moule ouvert allongé (1), de telle sorte que certains des mats (10) de matériau se chevauchent au moins partiellement, ledit appareil comportant un chariot (70) adapté pour être transporté le long du moule ouvert (1), **caractérisé en ce qu'**un certain nombre de cylindres (20) sont mis en oeuvre sur le chariot (70) et sont adaptés pour positionner chaque mat (10) de matériau sur le moule (1), et **en ce qu'**au moins certains des cylindres (20) sont en mesure de se déplacer mutuellement lors du transport du chariot (70) de telle sorte que les cylindres (20) peuvent sensiblement suivre un contour prévu du mat (10) de matériau, dans lequel ledit appareil comporte un applicateur (50) suspendu en provenance d'un bras (60) dudit chariot (70), dans lequel le distributeur (50) est raccordé par rotation au bras (60) par le biais d'un pivot (55), et loge lesdits cylindres (20), lesdits cylindres (20) étant en mesure de se déplacer vers ledit moule (1) ou à l'opposé de celui-ci, dans lequel un axe du pivot (55) est orienté sensiblement dans un axe longitudinal du moule (1) et/ou de manière sensiblement parallèle par rapport à une direction de transport du chariot (70).

12. Appareil servant à poser un matériau en fibres sur un moule selon la revendication 11, dans lequel ledit applicateur (50) loge un rouleau comportant du matériau (90) à des fins d'agencement sur ledit moule (1).

13. Appareil servant à poser un matériau en fibres sur un moule selon l'une quelconque des revendications 11 à 12, dans lequel ledit applicateur (50) loge un rouleau comportant du matériau sous la forme d'un « tambour de type revolver » comportant un certain nombre de rouleaux comportant chacun du matériau ayant diverses propriétés.

14. Appareil servant à poser un matériau en fibres sur un moule selon l'une quelconque des revendications 11 à 13, dans lequel, selon une vue de dessus de l'appareil, les cylindres (20) sont agencés sur le chariot (70) de telle sorte que les cylindres (20) dans une zone centrale d'une rangée formée par les cylindres (20) sont positionnés au niveau d'une position avancée, selon une vue dans la direction de transport du chariot (70), par rapport aux cylindres (20) dans des zones d'extrémité de ladite rangée formée par les cylindres (20), et dans lequel, selon une vue de dessus de l'appareil, les cylindres (20) sont agencés sur le chariot (70) en une rangée ayant sensiblement la forme d'un V ou d'un demi-cercle.

15. Appareil servant à poser un matériau en fibres sur un moule selon l'une quelconque des revendications 11 à 14, dans lequel les cylindres (20) sont agencés sur le chariot (70) en une rangée, et en ce qu'au moins certains des cylindres (20) sont sensiblement coniques avec un angle du cône des cylindres individuels (20) qui varie, et de préférence qui va en augmentant, depuis une zone centrale de la rangée de cylindres (20) vers des zones d'extrémité de la rangée de cylindres (20).
